# EUROPEAN PATENT SPECIFICATION

(11) **EP 2 780 589 B1**
(45) Date of publication and mention of the grant of the patent: **24.02.2016**
(21) Application number: 12791636.9
(22) Date of filing: 09.11.2012
(51) Int. Cl.: F03G 6/06

(54) **HYBRID FOSSIL FUEL AND SOLAR HEATED SUPERCRITICAL CARBON DIOXIDE POWER GENERATING SYSTEM AND METHOD**
HYBRIDER FOSSILER BRENNSTOFF UND SOLARBEHEIZTES ÜBERKRITISCHES KOHLENDIOXIDSTROMERZEUGUNGSSYSTEM SOWIE VERFAHREN
SYSTÈME ET PROCÉDÉ DE GÉNÉRATION DE PUISSANCE UTILISANT DU DIOXYDE DE CARBONE SUPERCRITIQUE À CHAUFFAGE HYBRIDE PAR COMBUSTIBLE FOSSILE ET SOLAIRE

(30) Priority: 11.11.2011 US 201161558907 P; 07.02.2012 US 201261596203 P; 08.11.2012 US 201213672312
(43) Date of publication of application: 24.09.2014
(60) Divisional application: 15194074.9
(73) Proprietor: Palmer Labs, LLC, Durham, NC 27701 (US); 8 Rivers Capital, LLC, Durham, North Carolina 27701 (US)
(72) Inventor: PALMER, Miles R., Chapel Hill, NC 27516 (US); FETVEDT, Jeremy Eron, Raleigh, NC 27612 (US); FREED, David Arthur, Durham, North Carolina 27701 (US); BROWN, JR., Glenn William, Durham, NC 27705 (US)
(74) Representative: Hoeger, Stellrecht & Partner Patentanwälte mbB
(86) International application number: PCT/US2012/064397
(87) International publication number: WO 2013/071069

(56) References cited:
- WO-A1-95/12757
- US-A1- 2011 127 773
- US-A1- 2011 233 940
- US-A1- 2011 239 651

## Description

### FIELD OF THE DISCLOSURE

The present disclosure relates to integration of a solar heating system and method with a fossil fuel combustion power generating system and method. More particularly, the integrated system utilizes the solar heating to supplement the combustion heating of a recycle CO₂ stream in the combustion power generating system and method and thus achieve increased efficiencies.

### BACKGROUND

US 2011/0127773 A1 discloses an electricity generation system including a solar preheater for preheating compressed discharge air, a combustor to receive the heated compressed air from the solar preheater and to burn a fuel using the heated compressed air to generate hot burned gas. A first turbine is operatively coupled to the combustor to receive the hot burned gas from the combustor and to expand the hot burned gas to generate exhaust gas. A heat recovery system generator is operatively coupled to the first turbine to receive the exhaust gas from the first turbine and to generate vapor by heating a condensed fluid using the exhaust gas. A solar evaporator/superheater is operationally coupled to the heat recovery system generator to receive a heated working fluid from the heat recovery steam generator and generates solar vapor by heating the heated working fluid using a second portion of the heated fluid. A second turbine is configured to drive a second generator using vapor received from the heat recovery steam generator and the solar vapor received from the solar evaporator/superheater.

Concentrated solar power (CSP) systems typically are configured to concentrate the solar energy from a large area of sunlight (e.g., from a field of heliostats) in a relatively small receiver where the concentrated light is converted to high heat. The heat then can be utilized in a conventional means of producing electricity, such as heating water to produce steam for a turbine connected to an electrical power generator. Such known CSP systems can suffer from a variety of deficiencies. For example, many existing CSP systems can only produce near maximum power under the most favorable sunlight conditions, which are limited by the number of daylight hours and local weather conditions. As such, the existing CSP systems produce power only a fraction of the time that power is needed. Further, since CSP systems typically function as only a heat source for an integrated thermodynamic power production cycle (e.g., a steam cycle), the efficiencies of CSP systems can be significantly limited by the thermodynamic cycle that is used. The end result of these limitations is that solar electricity generated by the known CSP systems has achieved limited output to the electrical grids at an increased cost relative to electricity generated by conventional systems that combust fossil fuel as the heat source.

The efficiency of a CSP system typically is temperature dependent. As the temperature resulting from the concentrated solar rays increases, different forms of conversion have been utilized. For example, at temperatures up to about 600 °C, standard technologies, such as steam turbines, have been used with efficiencies in the range of about 40%. At temperatures above 600 °C, gas turbines can be used with increased efficiencies of a few percentage points. Higher temperatures have been shown to be problematic because different materials and techniques are required. One proposal for very high temperatures is to use liquid fluoride salts operating at temperatures of about 700 °C to 800 °C in combination with multi-stage turbine systems, which have been purported to achieve thermal efficiencies in the 50% range. The higher operating temperatures have been viewed as beneficial because they permit the plant to use higher temperature dry heat exchangers for thermal exhaust, and this reduces water use, which can be important in areas where large solar plants can be practical - e.g., desert environments.

Despite the promise of high temperature systems, previous attempts to implement CSP systems have provided only limited success and have not achieved an economical, long-term means for integrating CSP electrical generation into the mainstream. Even attempts to overcome the basic flaw in CSP technology - power generation during times of no or low solar output - have not made the technology commercially viable. For example, energy storage techniques can extend power production, but these methods have proven to offer limited capacity (e.g., steam accumulators) and be costly and/or technologically challenging (e.g., molten salt tanks). Others have attempted using natural gas to provide supplemental heating to a working fluid utilized in a solar heater. See, for example, U.S. Patent No. 6,739,136. Such known supplemental heating systems to date, however, have failed to overcome the limited efficiency of the basic solar thermal conversion process previously mentioned. Accordingly, there remains a need in the art for an efficient, cost-effective system and method for utilizing solar heating in electrical power generation. More specifically, there remains a need for such systems and method that provide electrically power suitable for sustained introduction into an electrical grid.

### SUMMARY OF THE DISCLOSURE

The present disclosure provides an integration of systems in a manner that can improve efficiencies and reduce costs in relation to both systems. More particularly, the disclosure provides for the integration of a power generating system and method with a solar heating system and method. Specifically, the integrated system and method can increase the efficiency of a combustion cycle in a power generating system and method by utilizing the solar heating system as a supplemental or alternate heat source for the power cycle. Similarly, the integrated system and method can exhibit an efficiency that is increased relative to the efficiency of the same power production cycle absent the integrated solar heating. As such, the integrated system and method can include a plurality of heaters that can operate independently from one another, that can be operated alternatively (such as cyclically), or that can be operated at the same time to heat a working fluid that can be recycled through the system where it is heated, expanded for power generation, cooled, optionally purified, compressed, and re-heated.

The integrated systems and methods of the present disclosure can utilize any suitable power generating system and method that includes a recycled working fluid and that is amenable to integration with solar heating to provide at least a portion of the heating used in the power generating system. Systems and methods for power generation using predominately CO₂ in a closed combustion cycle are described in U.S. Pat. Pub. No. 2011/0179799, the disclosure of which is incorporated herein by reference in its entirety, and in various embodiments, one or more components or conditions of the power generating systems and methods disclosed therein can be incorporated into the power generating systems and methods of the present disclosure. The combustion cycle can use a low pressure ratio turbine that expands a mixture of combustion products that are formed in the combustion of a fuel in oxygen in the presence of a CO₂ working fluid stream (which typically is recycled - at least in part - through the closed system). In various embodiments, a CO₂ cycle such as described above can be used in power production using natural gas, coal, or other carbonaceous materials as a fuel source. Hot turbine exhaust can be used to at least partially preheat the recycled CO₂ working fluid stream in an economizer heat exchanger. The recycled CO₂ working fluid stream also can be heated using a secondary heat source, such as heat derived from the compression energy from an O₂ production plant that is used to provide oxygen for combustion. Fuel and combustion-derived impurities (e.g., sulfur compounds, CO₂, H₂O, ash, Hg, etc.) can be separated for disposal with no atmospheric emissions. The system can produce a high pressure CO₂ recycle stream (i.e., that is recycled as the working fluid) and a high pressure CO₂ product stream (i.e., excess CO₂ that is not recycled into the combustion cycle and that can be captured for uses, such as enhanced oil recovery, or for sequestration). This can be achieved by compressing the cooled turbine exhaust stream from the economizer heat exchanger in a compression system, which can be a multistage compression system.

The present disclosure provides the ability to integrate a closed cycle power generating system and method with a CSP (or other solar heating) system and method to achieve a highly efficient power generating system that can rotate heating of a working fluid between a combustor or a solar concentrator or can simultaneously utilize both heat of combustion and solar heating to heat a recycled working fluid. Such integration can increase the efficiency of, for example, a closed CO₂ cycle power generating process with complete carbon capture to greater than 50%, greater than 55%, greater than 60%, greater than 65%, or greater than 70%.

In certain embodiments, the present disclosure can provide methods of generating power. For example, a method of generating power can comprise combusting a carbonaceous fuel in a primary combustor in the presence of oxygen and CO₂ to form a CO₂ recycle stream and to produce a combined combustion product stream. The method further can comprise passing the combined combustion product stream through a turbine to generate power and form a turbine exhaust stream comprising supercritical CO₂, passing the turbine exhaust stream comprising supercritical CO₂ through a combustion product heat exchanger to convert the supercritical CO₂ to a stream comprising gaseous CO₂, optionally purifying the gaseous CO₂ stream, pressurizing the CO₂ stream to form a recycle CO₂ stream, passing the recycle CO₂ stream back through the combustion product heat exchanger to form a re-heated recycle CO₂ stream, passing the re-heated recycle CO₂ stream through a solar heater, and passing the recycle CO₂ stream to the combustor. The method can include passing the re-heated recycle CO₂ stream through a flow valve whereby the re-heated recycle CO₂ stream can be split with a first portion passing to the combustor and a second portion passing through the solar heater, or whereby the re-heated recycle CO₂ stream can be alternated between passage to the combustor or passage to the solar heater. Further, in some embodiments, the method can include passing a stream from the solar heater through a supplemental combustion heater prior to passing the re-heated recycle CO₂ stream to the primary combustor.

A method of generating power according to the present disclosure can comprise passing a CO₂ containing stream from a primary combustor through a turbine to expand the CO₂ containing stream, generate power, and form a turbine exhaust stream comprising CO₂. The method further can comprise heating CO₂ from the turbine exhaust stream with a solar heater. Still further, the method can comprise passing the CO₂ from the solar heater to the primary combustor. In additional embodiments, the method further can comprise passing the CO₂ from the solar heater to a combustion heater prior to passage to the primary combustor. Also, the method further can comprise cooling the turbine exhaust stream comprising CO₂ in a heat exchanger to form a cooled turbine exhaust stream comprising CO₂. Thereafter, the method can comprise purifying the cooled turbine exhaust stream comprising CO₂ in a water separator to form a stream comprising dried CO₂ from the cooled turbine exhaust stream. The dried CO₂ from the cooled turbine exhaust stream can be pressurized to form a pressurized CO₂ containing stream, and the pressurized CO₂ containing stream can be heated in the heat exchanger prior to being heated with the solar heater.

In some embodiments, a method of generating power according to the disclosure can comprise: passing a CO₂ containing stream from a primary combustor through a turbine to expand the CO₂ containing stream, generate power, and form a turbine exhaust stream comprising CO₂; cooling the turbine exhaust stream comprising CO₂ in a heat exchanger to form a cooled turbine exhaust stream; pressurizing CO₂ from the cooled turbine exhaust stream to form a pressurized CO₂ containing stream; heating the pressurized CO₂ containing stream in the heat exchanger; heating the pressurized CO₂ containing stream with a solar heater; and passing the pressurized and solar heated CO₂ containing stream to the primary combustor. The CO₂ containing stream entering the turbine can be at a pressure of about 150 bar (15 MPa) or greater and can be at a temperature of about 500 °C or greater. The ratio of the pressure of the CO₂ containing stream entering the turbine to the pressure of the turbine exhaust stream comprising CO₂ can be about 12 or less.

In various embodiments, the step of pressurizing the CO₂ containing stream can comprise passing the stream through a plurality of pumping stages. Further, the CO₂ containing stream can be cooled between two pumping stages. A portion of the pressurized CO₂ containing stream can be heated with supplemental heat after the pressurizing step and prior to being passed through the solar heater. For example, the supplemental heat can include heat of compression from an air separation plant. The pressurized and solar heated CO₂ containing stream can be passed from the solar heater through a combustion heater prior to passage into the primary combustor.

The method further can comprise combusting a carbonaceous fuel in the primary combustor in the presence of oxygen and the CO₂ containing stream such that the pressurized and solar heated CO₂ containing stream passed through the turbine further comprises one or more combustion products. The method also can comprise passing the cooled turbine exhaust stream from the heat exchanger through a separator to separate one or more of the combustion products from the CO₂. The carbonaceous fuel specifically can be a liquid or gas.

In other embodiments, the carbonaceous fuel can comprise a stream of partially oxidized combustion products. For example, the method further can comprise combusting a solid fuel in the presence of O₂ and CO₂ in a partial oxidation combustor, the solid fuel, O₂, and CO₂ being provided in ratios such that the solid fuel is only partially oxidized to produce the partially oxidized combustion product stream comprising an incombustible component, CO₂, and one or more of H₂, CO, CH₄, H₂S, and NH₃. The solid fuel, O₂, and CO₂ specifically can be provided in ratios such that the temperature of the partially oxidized combustion product stream is sufficiently low that all of the incombustible components in the stream are in the form of solid particles. The method also can comprise passing the partially oxidized combustion product stream through one or more filters. The solid fuel particularly can comprise coal, lignite, or petroleum coke. Moreover, the solid fuel can be in a particulate form and can be slurried with CO₂.

If desired, the amount of carbonaceous fuel and oxygen provided to the primary combustor can be controlled such that the heat of combustion in the primary combustor is inversely related to heat available from the solar heater for heating the pressurized CO₂ containing stream passing through the solar heater. For example, the amount heat available from the solar heater can vary by greater than 10% over a single solar cycle. As such, the amount of carbonaceous fuel and oxygen provided to the combustor can be controlled such that the temperature of the CO₂ containing stream passed to the turbine can vary by less than 10% over the single solar cycle.

The methods of the disclosure further can comprise splitting the pressurized CO₂ containing stream into a variety of further streams. For example, in some embodiments, the methods can comprise splitting the pressurized CO₂ containing stream exiting the heat exchanger prior to passage into the solar heater such that a first portion of the pressurized CO₂ containing stream continues to the solar heater and a second portion of the pressurized CO₂ containing stream passes to the primary combustor without first passing through the solar heater. In various embodiments, the solar heater can heat the CO₂ containing stream to a temperature of about 500 °C or greater. In other embodiments, the solar heater can be heated by the CO₂ containing stream.

The present disclosure further provides power generating systems. In some embodiments, a power generating system according to the present disclosure can comprise the following: a solar heater; a primary combustor in fluid communication with the solar heater; a power producing turbine in fluid communication with the primary combustor; a heat exchanger in fluid communication with the power producing turbine and the solar heater; and at least one compressor in fluid communication with the heat exchanger. The system further can comprise a combustion heater positioned between and in fluid communication with the solar heater and the primary combustor. Further, the system can comprise a separator positioned between and in fluid communication with the heat exchanger and the at least one compressor. Also, the system can comprise an air separation plant. Such air separation plant particularly can be a cryogenic air separation plant comprising an adiabatic main compressor and a booster compressor. The heat exchanger used in the system can comprise a series of two or more heat exchange units.

In some embodiments, the system can comprise a partial oxidation combustor having an outlet in fluid communication with an inlet of the primary combustor. The system also can comprise a filter positioned between and in fluid communication with the outlet of the partial oxidation combustor and the inlet of the primary combustor. In some embodiments, the system can comprise a splitter positioned downstream from and in fluid communication with a hot end outlet of the heat exchanger, said splitter having a first outlet in fluid communication with the partial oxidation combustor and a second outlet in fluid communication with the solar heater. In other embodiments, the system can comprise a splitter positioned downstream from and in fluid communication with a hot end outlet of the heat exchanger, said splitter having a first outlet in fluid communication with the primary combustor and a second outlet in fluid communication with the solar heater. In further embodiments, the system can comprise a flow valve positioned downstream from and in fluid communication with a hot end outlet of the heat exchanger, said flow valve having a first outlet in fluid communication with the primary combustor and a second outlet in fluid communication with the solar heater, said flow valve being adapted to alternate flow between the solar heater and the primary combustor.

The power generation methods of the present disclosure can particularly be characterized in relation to the overall efficiency of the power generation. For example, the power generation can be achieved with an overall efficiency on a lower heating value of at least 60%. In other embodiments, the efficiency can be at least 65%. Thus, the disclosed systems and methods fill a need for power generation with carbon capture and storage (CCS). Whereas achieving CCS with conventional power generating systems has proven difficult and/or not cost-effective, the presently disclosed methods utilizing closed cycle combustion can achieve high efficiency and meet the needs for CCS, all while doing so in a cost-effective manner.

### BRIEF DESCRIPTION OF THE FIGURES

FIG. 1 is a flow diagram illustrating a power generating system and method according to one embodiment of the present disclosure wherein a solar heater is integrated with a combustor and a turbine;
FIG. 2 is a flow diagram illustrating a power generating system and method according to one embodiment of the present disclosure including a primary combustor and a solar heater;
FIG. 3 is a flow diagram illustrating a power generating system and method according to further embodiment of the present disclosure wherein a partial oxidation combustor is included in addition to a primary combustor;
FIG. 4 is a flow diagram illustrating a power generating system and method according to another embodiment of the present disclosure wherein a splitter is included to split a recycle CO₂ stream between a solar heater and a primary combustor;
FIG. 5 is a flow diagram illustrating a power generating system and method according to still a further embodiment of the present disclosure wherein a splitter is included to split a recycle CO₂ stream into three streams passing to a solar heater, a partial oxidation combustor, and a primary combustor;
FIG. 6 is a flow diagram illustrating a power generating system and method according to yet another embodiment of the present disclosure wherein a two position flow valve is included to alternate a recycle CO₂ stream between a solar heater and a primary combustor;
FIG. 7 is a flow diagram illustrating a power generating system and method according to still a further embodiment of the present disclosure wherein a two position flow valve is included the alternate a recycle CO₂ stream between a solar heater and a combustor flow, which in turn is split between a partial oxidation combustor and a primary combustor; and
FIG. 8 is a solar cycle heating chart showing the relative heating supplied by the various heating components of a system according to certain embodiments of the present disclosure during an exemplary, single solar cycle.

### DETAILED DESCRIPTION OF THE DISCLOSURE

The invention now will be described more fully hereinafter through reference to various embodiments. These embodiments are provided so that this disclosure will be thorough and complete, and will fully convey the scope of the invention to those skilled in the art. The invention may be embodied in different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

US Patent Publication No. 2011/0179799, as already noted above, describes power production systems and methods wherein a CO₂ cycle is utilized. In some embodiments, a CO₂ circulating fluid can be provided in a combustor suitable for high temperature and high pressure conditions along with a carbonaceous fuel (such as NG, coal, syngas, biomass, etc.) and an oxidant, such as air or O₂. Such systems and methods can comprise a combustor that operates at high temperatures (e.g., about 500 °C or greater, about 750 °C or greater, about 1,000 °C or greater, or about 1,200 °C or greater), and the presence of the circulating fluid can function to moderate the temperature of a fluid stream exiting the combustor so that the fluid stream can be utilized in energy transfer for power production. The nature of the reaction process at high temperatures and pressures, and with high recycle CO₂ concentrations, can provide for excellent process efficiency and reaction speeds. The combustion product stream can be expanded across at least one turbine to generate power. The expanded gas stream then can be cooled to remove combustion by-products and/or impurities from the stream, and heat withdrawn from the expanded gas stream can be used to heat the CO₂ circulating fluid that is recycled back to the combustor.

In the cooled state, the combustion stream can be processed for removal of water and other contaminants to provide an essentially pure CO₂ stream for recycle back through the combustor with the materials for combustion. The purified CO₂ stream typically is in a gaseous state, and it is beneficial to subject the stream to the necessary conditions such that the CO₂ is a supercritical state. For example, after the combustion stream has been expanded through a turbine for power generation, cooled, and purified to comprise essentially pure CO₂ (e.g., at least 95% by mass, at least 97% by mass, or at least 99% by mass CO₂), the resultant recycle CO₂ stream can be compressed to increase the pressure thereof, such as to about 80 bar (8 MPa). A second compression step can be used to increase the pressure to approximately the pressure in the combustor - e.g., about 200 bar (20 MPa), about 250 bar (25 MPa), or about 300 bar (30 MPa). In between the compression steps, the CO₂ stream can be cooled to increase the density of the stream so as to reduce the energy input required to pump the stream to the higher pressure. The finally pressurized recycle CO₂ stream can then be further heated and input back into the combustor.

Although the above-described power generating system and method provides increased efficiency over conventional power generation systems and methods (and does so while simultaneously capturing the produced carbon), the systems and methods of the present disclosure can further increase cycle efficiency through combination with a concentrated solar power (CSP) system. The CSP system can provide heating of the recycle CO₂ stream during times of sufficient available sunlight as an alternative to using the combustor in the combustion cycle or the CSP system can provide supplemental heating of the recycle CO₂ stream to reduce the fuel requirements of the combustor in the combustion cycle.

A CSP system useful according to the present disclosure can include any solar thermal collector adapted to concentrate solar power sufficiently to produce the necessary heating for a working fluid in a power generating system, such as described herein. Preferably, a high temperature solar collector can be used. One non-limiting example of a solar collector system that can be utilized for concentrating solar power according to the present disclosure is a parabolic trough wherein a series of curved, mirrored troughs can be used to reflect the direct solar radiation onto a collector tube containing a fluid (also called a receiver, absorber, or collector) running the length of the trough and positioned at the focal point of the reflectors. The trough is parabolic along one axis and linear in the orthogonal axis. The trough can be positionally adjusted daily and/or seasonally to maximize solar radiation collection. The absorber fluid can flow to a central heater. Power towers (also known as central tower power plants or heliostat power plants) are another example and can utilize a heliostat field to focus concentrated sunlight on a receiver, which typically sits atop a tower in the center of the field. In such systems, the heliostats can be positioned in a vertical array (e.g., a dish or parabolic configuration) to focus the solar power to a heat collector on a tower. Fresnel reflectors are a further example of useful solar concentrating technology that can be used according to the present disclosure.

In certain embodiments of the present disclosure, a CSP system can comprise solar concentrator and a solar heater. Generally, the solar concentrator can comprise heliostats, mirrors, lenses, or the like as noted above for gathering and concentrating solar radiation. The solar heater can comprise one or more components adapted to transfer heat from the collected and concentrated solar radiation and/or to convert the heat to work. For example, the solar heater can comprise a heat sink wherein the heat is stored and wherefrom the heat can be transferred to another material or fluid, such as a CO₂ containing stream that can be passed therethrough. In other embodiments, the solar heater can comprise a solar cycle working fluid (e.g., a CO₂ containing stream, a molten salt fluid, or the like). Such working fluid can pass through a collector tube as noted above for heating or can be present only in the solar heater for heating by the collected and concentrated solar radiation (e.g., in a power tower). The solar heater thus can comprise heat transfer components useful to transfer heat from the solar cycle working fluid to another material or fluid, such as a CO₂ containing stream. In such embodiments, the term solar heater can encompass a discrete unit having the solar cycle working fluid passing therethrough and being adapted for passage of the CO₂ containing stream (as an example) therethrough in a heat exchange relationship. The term solar heater also can encompass a more expansive system whereby the solar cycle working fluid can be passed from a heat collection portion to a heat transfer portion where heat from the solar cycle working fluid can be passed to another material or fluid, as already described.

In various embodiments, methods of generating power according to the disclosure can comprise passing a CO₂ containing stream from a primary combustor through a turbine to expand the CO₂ containing stream, generate power, and form a turbine exhaust stream comprising CO₂. The turbine exhaust stream comprising CO₂ can be cooled in a heat exchanger to form a cooled turbine exhaust stream. The method further can comprise pressurizing CO₂ from the cooled turbine exhaust stream to form a pressurized CO₂ containing stream, and this stream can be heated in the heat exchanger. The re-heated, pressurized CO₂ containing stream can be further heated with a solar heater, such as by passing the pressurized CO₂ containing stream through the solar heater or can include heat exchange between the pressurized CO₂ containing stream and a solar heating cycle working fluid (e.g., a molten salt fluid or a separate CO₂ stream). Further, the method can comprise passing the pressurized and solar heated CO₂ containing stream to the primary combustor.

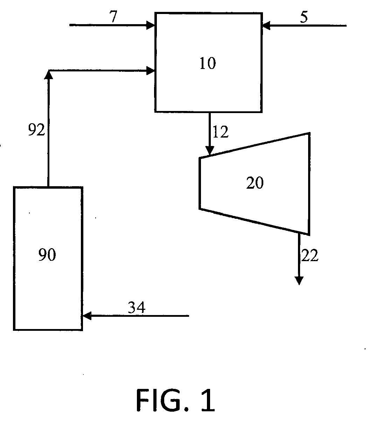

A power generating system according to the present disclosure is illustrated in the diagram of FIG. 1. As seen therein, the system generally comprises a solar heater 90 that is in fluid communication with a primary combustor 10 that in turn is in fluid communication with a turbine 20. In use, a gaseous fuel stream 7 (or other fuel type as further discussed herein) is introduced to the primary combustor along with an oxygen stream 5 and a CO₂ containing stream 92. The fuel can be combusted with the oxygen in the primary combustor with the CO₂ present as a working fluid that can be recycled through a closed system. A combustor exit stream 12 comprising CO₂ and any products of combustion and being pressurized can be passed to the turbine wherein the combustor exit stream is expanded to generate power and form a turbine exhaust stream 22. Depending upon the nature of the turbine exhaust stream, it can be further processed, such as to remove combustion products that may be present - e.g., water and/or excess CO₂. Thus, a system according to the present disclosure can include a variety of further components as otherwise described herein. The CO₂ from the further processed turbine exhaust stream can be input to the solar heater 90 as a CO₂ recycle stream 34. The solar heater exit stream 92 thus can direct CO₂ back to the combustor as the recycled working fluid.

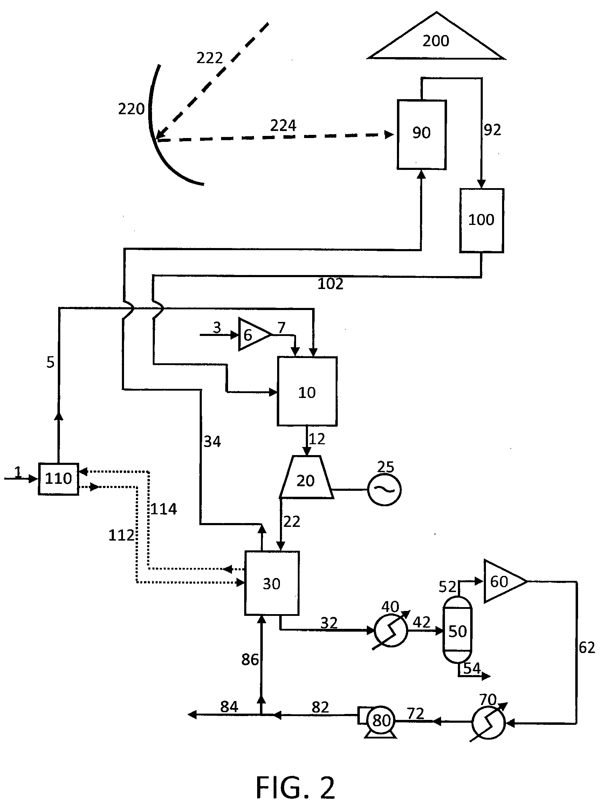

In some embodiments, the combustor 10 can be completely shut down, such as during times of peak solar heat production. In such instances, the heat of the solar heater exit stream 92 can be sufficient to negate the need for heat of combustion from the combustor. As such, the circulating streams can be sufficiently free of impurities that a continuous cycle can be carried out without the need for cooling and removal of combustion products. Thus, the turbine exhaust stream 22 can be passed directly to the solar heater 90 and thus become the CO₂ recycle stream. In other embodiments, the turbine exhaust stream can be passed through one or more pumps and/or compressors (see FIG. 2, for example) to pressurize the turbine exhaust stream prior to passage to the solar heater as the CO₂ recycle stream.

Although the combustor 10 can be shut down if desired during peak solar heat production, it can be advantageous to operate the integrated system with all components in continuous operation. The heating provided by the solar concentrator system can vary across a single solar cycle. As used herein, a single solar cycle is intended to mean a single 24 hour day, which can be measured from any point - e.g., from midnight to midnight or noon to noon. During sunlight hours, solar heating will be available and typically will increase from sunrise to peak sunlight hours and then decrease as sunset approaches. Depending upon the nature of the solar heater and the availability of solar heat storage, the heat produced by the solar heater will increase and decrease over a single solar cycle. As such, the amount of heat available from the solar heater can vary over a single solar cycle, such as by 5% or more, 10% or more, 20% or more, 30% or more, or 50% or more. In some embodiments, the amount of heat available from the solar heater over a single solar cycle can vary by 5% to 75%, 10% to 70%, or 15% to 60%. Via continuous operation of the presently disclosed integrated system, however, a constant turbine inlet temperature can be maintained.

During periods of peak solar energy availability, solar radiation can be concentrated in the solar heater to provide up to 100% of the necessary heat for the CO₂ circulated through the system to the turbine. As the available solar energy decreases, the amount of fuel and oxygen input to the combustor can be increased as needed to maintain the desired turbine inlet temperature. During periods when available solar energy is insufficient, if needed, the system can be operated on the combustion fuel alone. The systems and methods of the present disclosure further can allow for use of the combustion fuel during peak load periods and can return to a solar only or a mainly solar base load operation if the conditions warrant. The amount of combustion fuel and oxygen provided to the combustor can be controlled such that the heat of combustion in the primary combustor is inversely related to heat available from the solar heater for heating the CO₂ containing stream passing therethrough. As discussed above, this can provide for maintaining an essentially constant temperature at the point of entry into the turbine. For example, the amount of carbonaceous fuel and oxygen provided to the combustor can be controlled such that the temperature of the CO₂ containing stream passed to the turbine can vary by less than 2% over a single solar cycle. In other embodiments, the temperature of the CO₂ containing stream passed to the turbine can vary over a single solar cycle by less than 5%, less than 10%, or less than 15%. In further embodiments, the temperature of the CO₂ containing stream passed to the turbine can vary over a single solar cycle by about 2% to about 15%, about 3% to about 12%, or about 5% to about 10%.

Operation of a system according to the present disclosure as discussed above can be advantageous for several reasons. For example, this can impart simplicity to the operation method in that complicated switching cycles between the solar heater and the primary combustor can be avoided. Moreover, the efficiency of the combustion system and method can be significantly increased. For instance, in an integrated system wherein about 25% of the total energy output is derived from solar energy (e.g., 6 peak hours of sunlight per day) and wherein the combustion cycle has a stand-alone efficiency (on natural gas fuel) of about 50%, then the average efficiency for a given 24 hour period of the integrated system using a natural gas fuel can be about 66%.

Certain embodiments of the system and method of the present disclosure are illustrated in the flow diagram provided in FIG. 2. In relation to this figure, a gaseous fuel stream 3 is pumped in pump 6 to form a pressurized gaseous fuel stream 7 that is directed to the primary combustor 10. In one example, the gaseous fuel can be natural gas; however, other gaseous fuels can be used, such as syngas. Further, liquid fuels can be used. In the embodiments encompassed by FIG. 2, an oxygen stream 5 from an air separation plant 110 is also directed to the combustor. The air separation plant can be used for providing purified oxygen from an air source 1. For example, the oxygen stream can comprise oxygen in a purity of about 95% molar or greater, about 97% molar or greater, or about 99% molar or greater. In the combustor, the fuel is combusted with the oxygen in the presence of a CO₂ recycle stream to form a combustor exit stream 12, which, in this embodiment, comprises the CO₂ working fluid and any combustion products, such as water and/or CO₂.

The primary combustor can be any combustor suitable for combustion at the required temperature and pressure including, but not limited to a transpiration cooled combustor. A CO₂ recycle stream passed to the combustor can be provided at a pressure of about 150 bar (15 MPa) or greater, about 200 bar (20 MPa) or greater, about 250 bar (25 MPa) or greater, or about 300 bar (30 MPa) or greater. In other embodiments, the pressure can be about 150 bar (15 MPa) to about 400 bar (40 MPa), about 200 bar (20 MPa) to about 380 bar (38 MPa), or about 250 bar (25 MPa) to about 350 bar (35 MPa). Combustion in the primary combustor can be carried out at a temperature, for example, of about 500 °C or greater, about 600 °C or greater, or about 700 °C or greater. In other embodiments, combustion can be carried out at a temperature of about 500 °C to about 1800 °C, about 550 °C to about 1600 °C, or about 600 °C to about 1200 °C. In other embodiments, even further temperature ranges can be used, as otherwise described herein. In various embodiments, the CO₂ in the combustor exit stream 12 can be in a supercritical state.

The combustor exit stream comprising CO₂ is passed into a power generating turbine 20 that produces electrical power via a generator 25. The power generation method can be characterized by the pressure ratio across the turbine. The ratio of the pressure of the combustor exit stream (entering the turbine) to the pressure of the turbine exhaust stream comprising CO₂ (exiting the turbine) can be about 12 or less, about 10 or less, or about 8 or less. Further, the pressure ratio can be about 4 to about 12, about 5 to about 10, or about 6 to about 10.

The turbine exhaust stream 22 exiting the turbine 20 can be cooled by passage through a heat exchanger 30 to reduce the temperature thereof. This can be particularly useful to allow for separation of any impurities (e.g., combustion products) from the turbine exhaust stream. The heat exchanger (which can be characterized as a combustion product heat exchanger in some embodiments) can, in some embodiments, be a multi-stage heat exchanger or a series to two or more, preferably three, serial heat exchange units. In such series, the first serial heat exchange unit (passing from hot end to cold end) can transfer heat over a high, broad temperature range - e.g., from the turbine outlet temperature to the range of about 150 °C to about 200 °C. The second serial heat exchange unit can transfer heat over a middle, narrower temperature range - e.g., from the exit temperature of the first serial heat exchange unit to the range of about 80 °C to about 140 °C. The third serial heat exchange unit can transfer heat over a low temperature range - e.g., the range of about 20 °C to about 75 °C. Such ranges likewise can apply to fluids passed from the cold end to the hot end of each heat exchange units in the series. Such series can be beneficial in that added heating of the CO₂ recycle stream passing from the cold end of the serial heat exchange units to the hot end of the heat exchange units can be input at a defined point. For example, the stream exiting the third serial heat exchange unit and entering the second serial heat exchange unit can be split, and one fraction can enter the second serial heat exchange unit while the other fraction is heated from an external source, such as the heat of compression captured from an air separation plant. The higher heated fraction can then be joined with the stream exiting the second serial heat exchange unit and entering the first serial heat exchange unit. Such added heat can be beneficial to bring the temperature of the CO₂ recycle stream to within a preferable threshold relative to the temperature of the turbine exhaust stream. Specifically, the CO₂ recycle stream can be heated to within 50 °C or less, 40 °C or less, or 30 °C or less of the temperature of the turbine exhaust stream.

The cooled turbine exhaust stream 32 exiting the heat exchanger 30 preferably comprises CO₂ in a gaseous state and can be passed through a low temperature cooler 40 (e.g., a water cooler), which can be useful to cool the turbine exhaust stream to near ambient temperature. In particular embodiments, the low temperature cooler can cool the gaseous CO₂ stream to a temperature of about 50 °C or less, about 40 °C or less, or about 30 °C or less. Such component of the system in particular can be optional. The low temperature output stream 42 can be passed into a separator 50, which, in the illustrated embodiment is particularly a water separator. Thus, water stream 54 is withdrawn therefrom, and a dried CO₂ stream 52 exits the separator and can be passed through one or more pumps or compressors.

As illustrated, the dried CO₂ stream 52 is passed through a pump 60, which can be useful to increase the pressure of the dried CO₂ stream to a pressure sufficient such that the CO₂ is in a supercritical state. For example, the pressure can be increased to about 75 bar (7.5 MPa) or greater or about 80 bar (8 MPa) or greater. The resultant pump discharge CO₂ stream 62 can be further cooled in a densifying cooler 70, which can be particularly useful to increase the density of the supercritical CO₂ to reduce the energy requirement to compress the CO₂ stream to a pressure useful for recycle to the combustor 10. The stream particularly can be densified to a density of about 200 kg/m³ or greater, about 400 kg/m³ or greater, about 600 kg/m³ or greater, or about 800 kg/m³ or greater. The densifier cooler discharge CO₂ stream 72 then can be passed through a compressor 80 to increase the pressure thereof to a range that preferably is in the range described above in relation to the CO₂ recycle stream for input to the combustor. The compressed CO₂ discharge stream 82 can be split or can be returned in total to the combustion cycle. Beneficially, if desired, any excess CO₂ (e.g., CO₂ resulting from combustion) can be withdrawn as a high pressure CO₂ pipeline stream 84 - i.e., under conditions suitable for input to a pipeline. Any desired use of the withdrawn CO₂ (e.g., enhanced oil recovery, sequestration, etc.) is encompassed by the present disclosure.

The compressed CO₂ discharge stream (recycle fraction) 86 can be passed back through the heat exchanger 30 to heat the CO₂ containing stream to a temperature that is at or near the temperature of the turbine discharge stream. In particular embodiments, the temperature of the recycle CO₂ stream exiting the heat exchanger can differ from the temperature of the turbine discharge stream by only about 50 °C or less. If desired, additional heating can be input to the CO₂ containing stream before or during passage through the heat exchanger. For example, heat derived from the adiabatic compression in the air separating unit 110 can be added to the CO₂ containing stream. As illustrated, a high temperature heat transfer stream 112 can pass from the air separation plant to the heat exchange unit (e.g., to a stream passing into the heat exchanger or into one or more heat exchange units in a multi-stage heat exchanger), and a low temperature heat transfer stream 114 can pass from the heat exchanger back to the air separation plant.

The stream exiting the heat exchanger 30 can be characterized as being a CO₂ recycle stream. As such, the CO₂ recycle stream 34 can be at a pressure and/or temperature suitable for input to the combustor 10. In the illustrated embodiment, the CO₂ recycle stream is first passed to a solar heater 90 that can be a single unit or can be a component of a CSP system, as already described above. As illustrated, solar energy rays 222 reflect from a solar concentrator 220, and the concentrated solar radiation 224 is collected in the solar heater. The CO₂ recycle stream passing through the solar heater can be changed or unchanged depending upon the state of the CSP system. As illustrated, a fluid stream is passed directly through the solar heater to recover heat directly from the concentrating system. In other embodiments, the working fluid stream (i.e., the recycle CO₂ stream) can interface with a secondary working fluid (e.g., a solar cycle working fluid) in a heat exchange relationship. Such secondary working fluid can cycle through the solar concentrator system for heating, such as described above in relation to known solar thermal collectors. For example, a molten salt working fluid can be incorporated in the solar concentrator system, and the recycle CO₂ stream entering the solar heater can receive heat from the molten salt working fluid.

As discussed above, during periods of sufficient solar collection, the solar heater can be heated to a temperature wherein the CO₂ recycle stream passing therethrough is increased in temperature. At times of lesser solar collection, the solar heater can be at essentially the same temperature as the CO₂ recycle stream exiting the heat exchanger, and the CO₂ recycle stream may be neither heated nor cooled. At times of little or no solar collection, the solar heater can be increased in temperature by the passage of the CO₂ recycle stream therethrough. Such can be beneficial in that the solar heater can be maintained at an essentially constant temperature - e.g., within about 5%, within about 10%, within about 20%, or within about 30% of the peak heating temperature of the solar heater. In known solar concentrating systems, the receiver typically cycles from very hot to much cooler during every solar cycle. This thermal cycling presents a design challenge to the receiver and can cause the receiver (i.e., the solar heater) to fail due to build up of thermal stresses day by day or require its design to be limited in temperature, which limits performance. In the noted embodiments of the present disclosure wherein a CO₂ stream at or near the system operating temperature constantly flows through the receiver, daily temperature cycling can be avoided. The solar heater can thus be more reliable and can be built for higher temperatures, enabling higher efficiencies.

The solar heater exit stream 92 comprising recycle CO₂ can, at some times, be at a temperature that is below the required input temperature for the primary combustor 10. Thus, in some embodiments, a combustion heater 100 can be positioned between the output of the solar heater and the input of the primary combustor. The combustion heater can, for example, combust a fraction of the gaseous fuel stream 7 or a separate fuel stream to provide low level heating needed to step up the temperature of the CO₂ recycle fluid. The combustion heater exit stream 102 thus can be at a temperature required for input to the primary combustor and can be passed directly into the primary combustor. As will be appreciated, the combustion heater can be optional and, when present, can be fired only during the off-peak solar power periods when the solar heater exit stream is below a required temperature threshold.

As illustrated in FIG. 2, the integrated system of the present disclosure can include a retractable heat shield 200. The heat shield can be deployed during off-peak solar power periods to resist heat loss from the solar heater 90 while the solar concentrator 220 is supplying insufficient heating to maintain the high temperature required for the solar heater. The heat shield can comprise any material that is beneficial for resisting radiative losses from the solar heater and/or providing reflective heating - i.e., reflecting radiative losses back to the solar heater. The heat shield can be retractable so that, during peak solar power periods, all available solar radiation can be directed to the solar heater to maximize heat capacity.

A system and method according to the present disclosure also can encompass heat storage to maximize heat input from the solar heater. In certain embodiments, the solar heater and associated concentrating system can provide only a portion of the total heat required for the power generating system and method. Thus, it can be useful to maintain a constant, minimum flow of the combustion fuel into the primary combustor for the necessary minimum heating required. In some embodiments, however, the solar heater and its associated concentrating system can provide excess heating beyond that needed for operating conditions of the overall power generating system and method. In such embodiments, the disclosed system and method can include one or more heat storage components, such as a heated CO₂ store or a heated molten salt store. The stored heat (e.g., in a CO₂ storage tank or molten salt storage tank) then can be drawn upon during non-peak solar heating periods to further supplement the heating from the primary combustor and to conserve the excess heat produced by the solar heater during peak solar heating periods. Calculations based on an irradiation rate in the southwest United States of about 2,063 kWh/m², for example, have shown that a system according to certain embodiments of the present disclosure can operate at peak solar heating periods on 100% solar-derived heating, and the total solar heat input to the system can be approximately 32.9% of the system capacity.

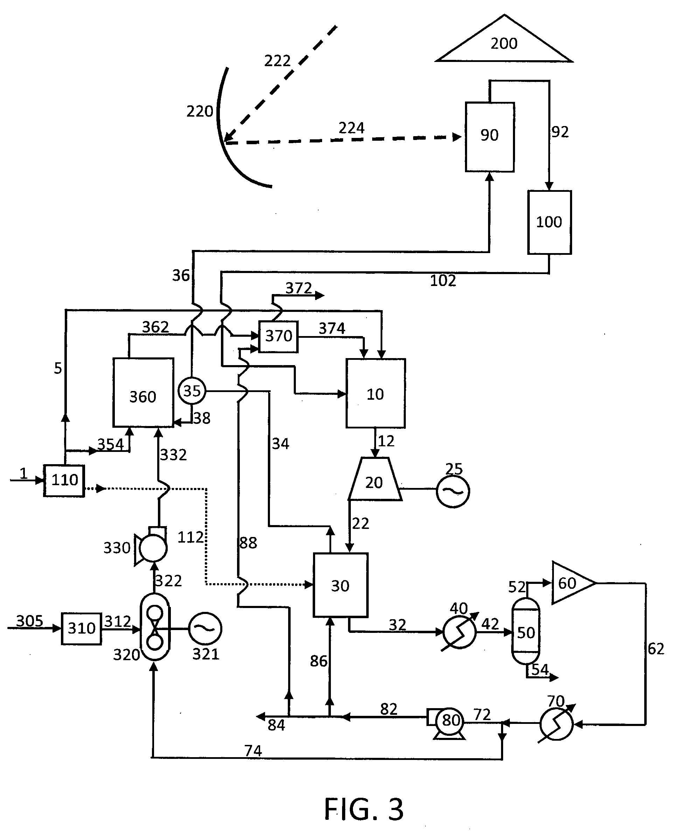

Although the present disclosure is discussed in relation to FIG. 2 as utilizing a gaseous or liquid fuel, the integrated system and method can also utilize solid fuels, such as coal, lignite, biomass, waste, and petroleum coke. In such embodiments, it can be useful to include a pre-combustor for the solid fuel that provides an output stream of combustible products that can be combusted in the primary combustor. Exemplary embodiments are illustrated in FIG. 3 wherein oxygen stream 5 can be split, and a POX oxygen stream 354 can be input to a partial oxidation (POX) combustor 360 along with a pressurized, particularized fuel slurry 332. To prepare the slurry, a solid fuel stream 305 (e.g., coal) is ground in a mill 310 to provide a particularized solid fuel stream 312, which is slurried in a mixer 320 powered by a generator 321. The particularized solid fuel is combined with a CO₂ slurry fraction 74 withdrawn from the densifier cooler discharge CO₂ stream 72 prior to pressurization through compressor 80. The CO₂, which is preferably supercritical at this point, combines with the particularized solid fuel to form low pressure slurry 322, which is then passed through a slurry pump 330 to provide the pressurized, particularized fuel slurry 332 as in input to the POX combustor. Further input to the POX combustor is a CO₂ recycle stream POX fraction 38, which can be taken from the CO₂ recycle stream 34, such as via a splitter 35. Also exiting the splitter is the CO₂ recycle stream solar heater fraction 36.

Combustion in the POX combustor provides a POX combustion stream 362, which can include a variety of components. In specific embodiments, the solid fuel, O₂, and CO₂ can be provided in ratios such that the partial oxidation of the solid fuel results in a combustion stream including an incombustible component, CO₂, and one or more of H₂, CO, CH₄, H₂S, and NH₃. The POX combustion stream can be passed through a filter 370 to remove any incombustible components, such as ash. The resulting filtered POX combustion stream 374 can be directed to the primary combustor 10 as the combustion fuel and can include essentially only gaseous and/or liquid fuel materials. A filtered particulate stream 372 can be withdrawn from the filter for disposal.

In combination with the above disclosure, the embodiments encompassed by FIG. 3 essentially comprise the system components otherwise discussed in relation to FIG. 2 and the methods of use thereof can be carried out in a manner as discussed in relation to FIG. 2. In particular, the combustor exit stream 12 can be expanded across the turbine 20. The turbine exhaust stream 22 can be cooled through the heat exchanger 30. The cooled turbine exhaust stream can be further cooled, if desired, in a low temperature cooler 40, and the low temperature output stream 42 can have any water and other impurities separated therefrom in a separator 50 as impurity stream 54. The dried CO₂ stream 52 can be pressurized in pump 60, and the pump discharge CO₂ stream 62 can be cooled and densified in the densifying cooler 70. The densifier cooler discharge CO₂ stream can be split, as discussed above, with a fraction 74 being directed to the mixer and the remaining fraction 72 being compressed in the compressor 80. The compressed CO₂ discharge CO₂ stream can be split. The compressed CO₂ discharge stream (recycle fraction) 86 can be passed back to the heat exchanger, and a compressed CO₂ discharge stream (filter fraction) 88 can be passed to the filter 370. Any remaining high pressure CO₂ for pipeline can be withdrawn as discussed above. The CO₂ recycle stream 34 exiting the hot end of the heat exchanger can be split at splitter 35 as noted above, with the respective fractions proceeding through the system as already discussed in relation to FIG. 3 above.

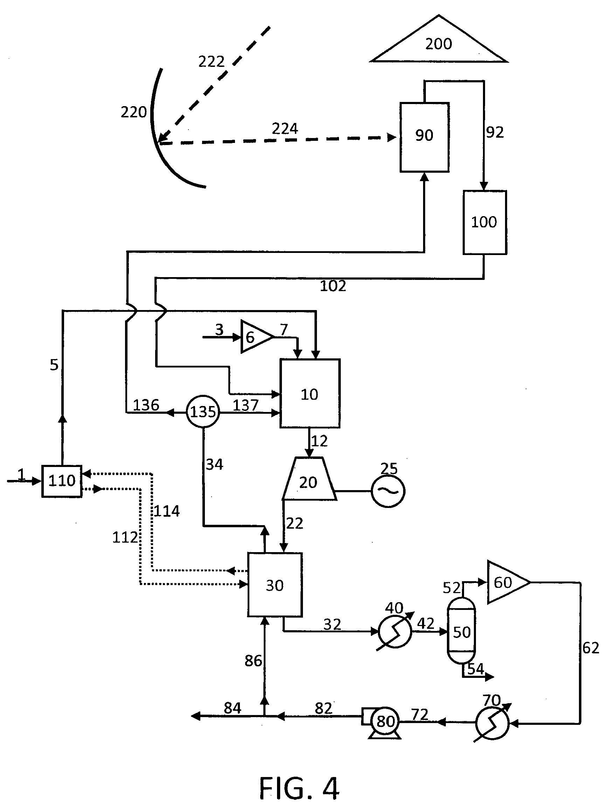

Returning to FIG. 2, the CO₂ recycle stream 34 can be configured to pass through the solar heater 90 and the optional combustion heater 100 prior to passage into the primary combustor 10. In other embodiments, though, such as in FIG. 3, the CO₂ recycle stream can be optionally split. Whereas the CO₂ stream is split for input to the POX combustor in FIG. 3, such splitting can be used for directing CO₂ flow to other components of the system. For example, as seen in FIG. 4, the CO₂ recycle stream exiting the hot end of the heat exchanger 30 can pass through a combustion recycle CO₂ splitter 135 to form two exit streams. A CO₂ recycle solar heater split stream 136 can be directed through the solar heater 90, and a CO₂ recycle primary combustor split stream 137 can pass directly to the primary combustor 10. The combustion recycle CO₂ splitter can be, for example, a simple flow splitter that can have a fixed ratio division of the entering CO₂ recycle stream or can have a variable division of the entering CO₂ recycle stream. A fixed division can range from 10:90 solar heater flow to primary combustor flow to 90:10 solar heater flow to primary combustor flow on a mass flow basis. Other fixed ratio divisions (solar heater flow to primary combustor flow) can be 20:80 to 80:20, 30:70 to 70:30, or 40:60 to 60:40, on a mass flow basis. In embodiments where variable division is used, flow rates to the solar heater and the primary combustor can be varied based upon the heat producing status of the solar heater. For example, at peak solar heating periods, 50% or greater, 75% or greater, 80% or greater, or 90% or greater of the mass flow can be directed to the solar heater. During periods of lower solar heating, the majority of the mass flow (e.g., the same mass flow rates noted above) can be directed to the primary combustor. Automated control of the variable flow valve also can be encompassed. Specifically, heat output from the solar heater can be continuously or intermittently monitored and compared against a predetermined CO₂ flow schedule. The mass flow of CO₂ through the combustion recycle CO₂ splitter can be automatically adjusted as the heat output from the solar heater increases and decreased through a solar cycle. For example, as available heat from the solar heater increases, the percentage of the CO₂ mass flow can be automatically and proportionally increased to the CO₂ recycle solar heater split and decreased to the CO₂ recycle primary combustor split. As available heat from the solar heater increases, the percentage of the CO₂ mass flow can be automatically and proportionally decreased to the CO₂ recycle solar heater split and increased to the CO₂ recycle primary combustor split. Thus, the systems of the present disclosure can include computerized control elements, including hardware and/or software adapted to measure available heat from the solar heater and adapted to open and close flow valves as necessary to adjust solar heater flow and primary combustor flow of the CO₂ recycle stream.

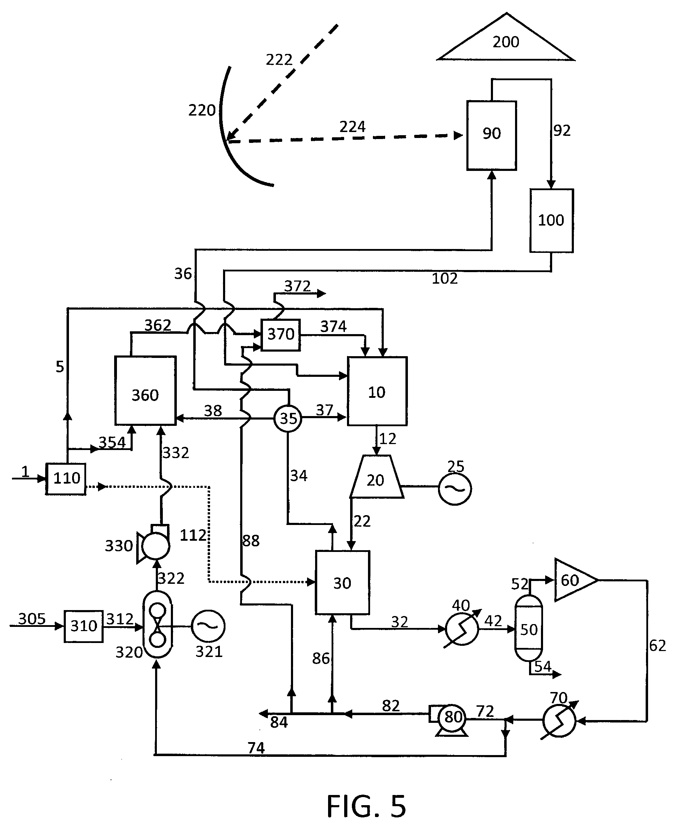

Similar splitting of the CO₂ recycle stream can be provided in embodiments wherein a solid fuel and a partial oxidation combustor are used. In FIG. 5, for example, a system substantially similar to that discussed above in relation to FIG. 3 is shown. The embodiment of FIG. 5 differs in that the splitter 35 has been repositioned and is configured to split the CO₂ recycle stream 34 into three separate streams. The CO₂ recycle stream POX fraction 38 again passes directly to the POX combustor 360. A CO₂ recycle stream solar heater fraction 36 likewise again passes directly to the solar heater 90. A dedicated CO₂ recycle primary combustor fraction 37 now is provided directly to the primary combustor 10. As in relation to FIG. 5, the splitter in FIG. 5 can be configured for fixed ratio division or variable ratio division. In some embodiments, a majority of the CO₂ recycle stream flow through the splitter (on a mass flow basis) can be directed to one of the three streams. In other words, a majority of the CO₂ recycle stream flow through the splitter (on a mass flow basis) can be directed to the POX combustor, or majority of the CO₂ recycle stream flow through the splitter (on a mass flow basis) can be directed to the solar heater, or majority of the CO₂ recycle stream flow through the splitter (on a mass flow basis) can be directed to the primary combustor.

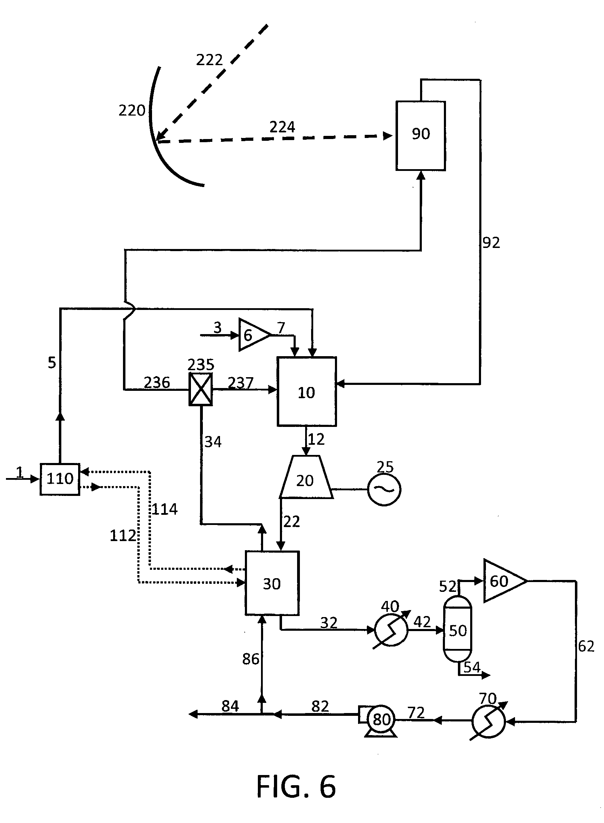

Returning to FIG. 2, if desired, the CO₂ recycle stream 34 can be alternatively directed in total to either the solar heater 90 or the primary combustor 10. For example, as illustrated in FIG. 6, a two position flow valve 235 can be positioned in-line of the CO₂ recycle stream. The flow valve can be placed in the solar heater position so that 100% of the CO₂ recycle stream passes to the solar heater 90 in CO₂ recycle solar heater loop 236. This configuration can be used during peak solar heating times so that all of the CO₂ recycle stream is heated in the solar heater. In such embodiments, the combustion heater can particularly be absent as no additional heating of the solar heater exit stream 92 will be needed, and the solar heater exit stream then can proceed directly to the primary combustor. The flow valve alternatively can be placed in the primary combustor position so that 100% of the CO₂ recycle stream passes to the primary combustor 10 in CO₂ recycle primary combustor loop 237. This configuration can be used during off-peak solar heating times when insufficient heating can be provided in the solar heater to heat the CO₂ recycle stream to the necessary temperature for entry to the primary combustor. The entirety of the CO₂ recycle stream then can be heated in the primary combustor to the necessary temperature.

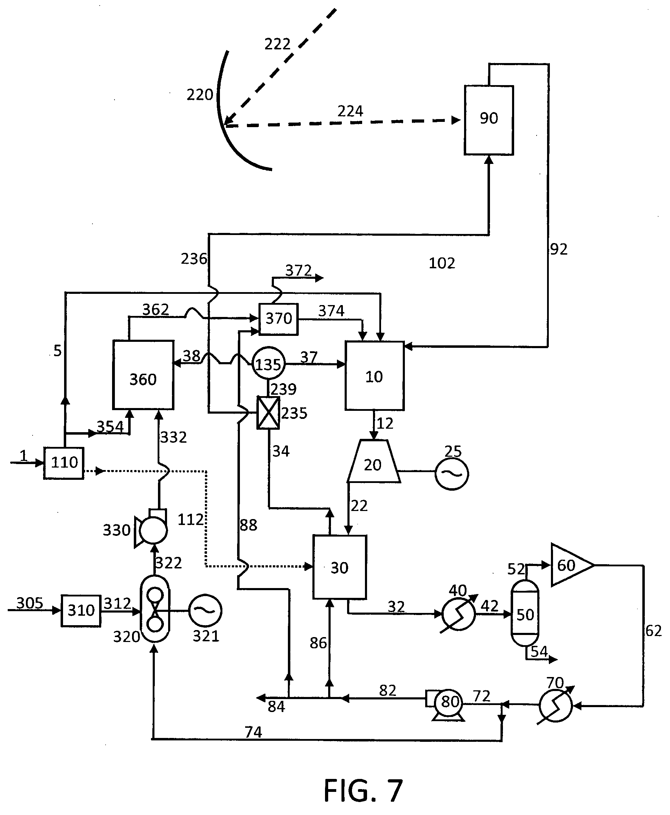

The use of a two position flow valve also can be used in embodiments wherein a solid fuel is combusted in a POX combustor prior to combustion of partial oxidation products in the primary combustor. For example, as seen in FIG. 7, a two position flow valve 235 is positioned in-line of the CO₂ recycle stream 34. The flow valve can be placed in the solar heater position so that 100% of the CO₂ recycle stream passes to the solar heater 90 in CO₂ recycle solar heater loop 236. This configuration can be used during peak solar heating times so that all of the CO₂ recycle stream is heated in the solar heater. In such embodiments, the combustion heater can particularly be absent as no additional heating of the solar heater exit stream 92 will be needed, and the solar heater exit stream then can proceed directly to the primary combustor. The flow valve alternatively can be placed in the combined combustors position so that 100% of the CO₂ recycle stream passes to the two combustors in CO₂ recycle combined combustors loop 239. This loop specifically can be split in a combustion recycle CO₂ splitter 135 wherein a portion of the recycle CO₂ can be passed to the POX combustor 360 in the CO₂ recycle stream POX fraction 38, and a portion of the recycle CO₂ can be passed to the primary combustor 10 in the CO₂ recycle primary combustor fraction 37.

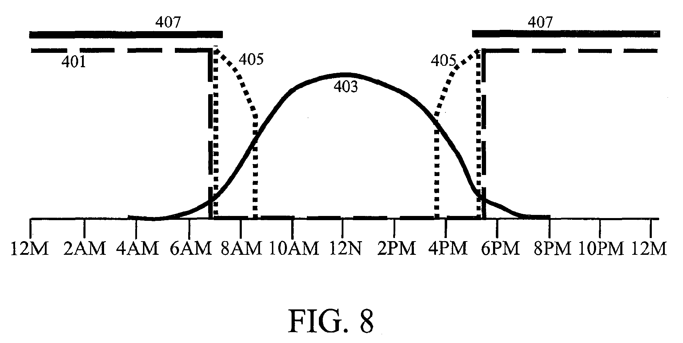

As can be seen from the foregoing, the integrated systems and methods of the present disclosure can be particularly beneficial for utilizing all available heating from a CSP system to improve the efficiency of a combustion power generating system and method. This is illustrated in FIG. 8, where the relative heating from the various sources in an integrated system and method utilizing natural gas as the fuel. Such heating sources are mapped across an exemplary solar cycle from midnight to midnight. As seen therein, during non-daylight times, the primary combustor is being fired such that a primary combustion period 401 accounts for most to all of the heating in the integrated system. As sunrise proceeds, the primary combustion period can cease (although a more gradual decrease can occur) while the solar heating period 403 increases. During the time that solar heating is increasing as peak solar output approaches, the combustion heater can be fired to supplement heating, and a combustor heating period 405 can begin and gradually decrease. As peak solar output begins to wane, the combustor heater period can again increase until the point that solar heating is sufficiently low such that the primary combustion period begins and dominates heat production. During the primary combustor period, heat shield deployment 407 can be implemented to reduce heat loss from the solar heater.

Many modifications and other embodiments of the inventions set forth herein will come to mind to one skilled in the art to which these inventions pertain having the benefit of the teachings presented in the foregoing descriptions. It is to be understood that the disclosure is not limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of generating power, the method comprising:
passing a CO₂ containing stream from a primary combustor (10) through a turbine (20) to expand the CO₂ containing stream, generate power, and form a turbine exhaust stream comprising CO₂;
cooling the turbine exhaust stream comprising CO₂ in a heat exchanger (30) to form a cooled turbine exhaust stream;
pressurizing CO₂ from the cooled turbine exhaust stream to form a pressurized CO₂ containing stream;
heating the pressurized CO₂ containing stream in the heat exchanger (30);
further heating the pressurized CO₂ containing stream with a solar heater (90); and
passing the pressurized and solar heated CO₂ containing stream to the primary combustor (10).

2. The method of claim 1, comprising one or more of the following steps:
the CO₂ containing stream entering the turbine (20) is at a pressure of about 150 bar (15 MPa) or greater;
the CO₂ containing stream entering the turbine is at a temperature of about 500 °C or greater;
the ratio of the pressure of the CO₂ containing stream entering the turbine to the pressure of the turbine exhaust stream comprising CO₂ is about 12 or less; and
the step of pressurizing the CO₂ containing stream comprises passing the stream through a plurality of pressurization stages, particularly further comprising cooling the CO₂ containing stream between two pressurization stages.

3. The method of claim 1, wherein a portion of the pressurized CO₂ containing stream is heated with supplemental heat after the pressurizing step and prior to being heated by the solar heater (90), particularly wherein the supplemental heat includes heat of compression from an air separation plant (110).

4. The method of claim 1, further comprising passing the pressurized and solar heated CO₂ containing stream from the solar heater (90) through a combustion heater (100) prior to passage into the primary combustor (10).

5. The method of claim 1, further comprising combusting a carbonaceous fuel in the primary combustor (10) in the presence of oxygen and the CO₂ containing stream such that the pressurized and solar heated CO₂ containing stream passed through the turbine further comprises one or more combustion products.

6. The method of claim 5, further comprising purifying the cooled turbine exhaust stream from the heat exchanger in a separator (50) by separating one or more of the combustion products from the CO₂, or wherein the carbonaceous fuel is a liquid or gas.

7. The method of claim 5, wherein the fuel comprises a stream of partially oxidized combustion products, particularly wherein the method further comprises combusting a solid fuel in the presence of O₂ and CO₂ in a partial oxidation combustor (360), the solid fuel, O₂, and CO₂ being provided in ratios such that the solid fuel is only partially oxidized to produce the partially oxidized combustion product stream comprising an incombustible component, CO₂, and one or more of H₂, CO, CH₄, H₂S, and NH₃; particularly wherein the solid fuel, O₂, and CO₂ are provided in ratios such that the temperature of the partially oxidized combustion product stream is sufficiently low that all of the incombustible component in the stream is in the form of solid particles.

8. The method of claim 7, further comprising passing the partially oxidized combustion product stream through one or more filters (370).

9. The method of claim 7, wherein the solid fuel comprises coal, lignite, biomass, or petroleum coke, particularly wherein the solid fuel is in a particulate form and is slurried with CO₂.

10. The method of claim 5, wherein the amount of carbonaceous fuel and oxygen provided to the primary combustor (10) is controlled such that the heat of combustion in the primary combustor is inversely related to heat available from the solar heater for heating the pressurized CO₂ containing stream passing through the solar heater (90), particularly wherein the amount heat available from the solar heater varies by greater than 10% over a single solar cycle, and particularly wherein the amount of carbonaceous fuel and oxygen provided to the combustor is controlled such that the temperature of the CO₂ containing stream passed to the turbine (20) varies by less than 10% over the single solar cycle.

11. The method of claim 1, further comprising splitting the pressurized CO₂ containing stream exiting the heat exchanger (30) prior to heating with the solar heater such that a first portion of the pressurized CO₂ containing stream continues to the solar heating step and a second portion of the pressurized CO₂ containing stream passes to the primary combustor (10) without first being heated by the solar heater (90).

12. The method of claim 1, wherein the solar heater heats the CO₂ containing stream to a temperature of about 500 °C or greater; or
wherein the solar heater is heated by the CO₂ containing stream; or
wherein the power generation is achieved with an overall efficiency on a lower heating value of at least 60%.

13. A power generating system comprising:
an air separation plant (110);
a solar heater (90);
a primary combustor (10) in fluid communication with the solar heater;
a power producing turbine (20) in fluid communication with the primary combustor;
a heat exchanger (30) in fluid communication with the power producing turbine and the solar heater; and
at least one compressor (80) in fluid communication with the heat exchanger.

14. The power generating system of claim 13, comprising one or more of the following features:
the power generation system further comprises a combustion heater (100) positioned between and in fluid communication with the solar heater (90) and the primary combustor (10);
the power generation system further comprises a separator positioned between and in fluid communication with the heat exchanger (30) and the at least one compressor (80);
the air separation plant (110) is a cryogenic air separation plant comprising an adiabatic main compressor and a booster compressor; and
the heat exchanger comprises a series of two or more heat exchange units.

15. The system of claim 13, further comprising a partial oxidation combustor (360) having an outlet in fluid communication with an inlet of the primary combustor (10), particularly comprising one or both of the following features:
the system further comprises a filter (370) positioned between and in fluid communication with the outlet of the partial oxidation combustor and the inlet of the primary combustor; and
the system further comprises a splitter (35) positioned downstream from and in fluid communication with a hot end outlet of the heat exchanger (30), said splitter having a first outlet in fluid communication with the partial oxidation combustor and a second outlet in fluid communication with the solar heater (90).

16. The system of claim 13, further comprising a splitter (135) positioned downstream from and in fluid communication with a hot end outlet of the heat exchanger (30), said splitter having a first outlet in fluid communication with the primary combustor (10) and a second outlet in fluid communication with the solar heater (90).

17. The system of claim 13, further comprising a flow valve (235) positioned downstream from and in fluid communication with a hot end outlet of the heat exchanger (30), said flow valve having a first outlet in fluid communication with the primary combustor (10) and a second outlet in fluid communication with the solar heater (90), said flow valve being adapted to alternate flow between the solar heater and the primary combustor.

## Patentansprüche

1. Ein Verfahren zum Erzeugen von Leistung, das Verfahren umfassend:
Hindurchleiten eines CO₂-haltigen Stroms von einer primären Brennkammer (10) durch eine Turbine (20), um den CO₂-haltigen Strom zu expandieren, Leistung zu erzeugen und einen CO₂ umfassenden Turbinenabgabestrom zu bilden;
Kühlen des CO₂ umfassenden Turbinenabgabestroms in einem Wärmetauscher (30), um einen gekühlten Turbinenabgabestrom zu bilden;
Unterdrucksetzen von CO₂ aus dem gekühlten Turbinenabgabestrom, um einen unter Druck stehenden CO₂-haltigen Strom zu bilden;
Erwärmen des unter Druck stehenden CO₂-haltigen Stroms in dem Wärmetauscher (30);
Weitererwärmen des unter Druck stehenden CO₂-haltigen Stroms mit einer Solarheizeinrichtung (90); und
Leiten des unter Druck stehenden und solarerwärmten CO₂-haltigen Stroms zu der primären Brennkammer (10).

2. Das Verfahren nach Anspruch 1, umfassend einen oder mehrere der folgenden Schritte:
der in die Turbine (20) eintretende CO₂-haltige Strom weist einen Druck von ungefähr 150 bar (15 MPa) oder mehr auf;
der in die Turbine eintretende CO₂-haltige Strom weist eine Temperatur von ungefähr 500 °C oder mehr auf;
das Verhältnis des Drucks des CO₂-haltigen Stroms, der in die Turbine eintritt, zu dem Druck des CO₂-haltigen Turbinenabgabestroms beträgt ungefähr 12 oder weniger; und
der Schritt des Unterdrucksetzens des CO₂-haltigen Stroms umfasst: Hindurchleiten des Stroms durch eine Mehrzahl von Unterdrucksetzungsstufen, insbesondere ferner umfassend: Kühlen des CO₂-haltigen Stroms zwischen zwei Unterdrucksetzungsstufen.

3. Das Verfahren nach Anspruch 1, wobei ein Teil des unter Druck stehenden CO₂-haltigen Stroms nach dem Schritt des Unterdrucksetzens und vor Erwärmung durch die Solarheizeinrichtung (90) mit Zusatzwärme erwärmt wird, wobei insbesondere die Zusatzwärme Verdichtungswärme von einer Lufttrennanlage (110) umfasst.

4. Das Verfahren nach Anspruch 1, ferner umfassend: Hindurchleiten des unter Druck stehenden und solarerwärmten CO₂-haltigen Stroms von der Solarheizeinrichtung (90) durch eine Verbrennungsheizeinrichtung (100), bevor er in die primäre Brennkammer (10) eingeleitet wird.

5. Das Verfahren nach Anspruch 1, ferner umfassend: Verbrennen eines kohlenstoffhaltigen Brennstoffs in der primären Brennkammer (10) in Gegenwart von Sauerstoff und des CO₂-haltigen Stroms derart, dass der durch die Turbine hindurch geleitete unter Druck stehende und solarerwämte CO₂-haltige Strom ein oder mehrere Verbrennungsprodukte umfasst.

6. Das Verfahren nach Anspruch 5, ferner umfassend: Reinigen des gekühlten Turbinenabgabestroms aus dem Wärmetauscher in einer Trenneinrichtung (50) durch Abtrennen eines oder mehrerer der Verbrennungsprodukte aus dem CO₂, oder wobei der kohlenstoffhaltige Brennstoff eine Flüssigkeit oder ein Gas ist.

7. Das Verfahren nach Anspruch 5, wobei der Brennstoff einen Strom von teiloxidierten Verbrennungsprodukten umfasst, wobei insbesondere das Verfahren ferner umfasst: Verbrennen eines Festbrennstoffs in der Gegenwart von O₂ und CO₂ in einer Teiloxidationsbrennkammer (360), wobei der Festbrennstoff, das O₂ und das CO₂ in Verhältnissen bereitgestellt werden derart, dass der Festbrennstoff nur teiloxidiert wird, um den teiloxidierten Verbrennungsproduktstrom, welcher eine nicht verbrennbare Komponente, CO₂ und eine oder mehrere der Komponenten H₂, CO, CH₄, H₂S und NH₃ umfasst, zu erzeugen; wobei insbesondere der Festbrennstoff, das O₂ und das CO₂ in Verhältnissen bereitgestellt werden derart, dass die Temperatur des teiloxidierten Verbrennungsproduktstroms ausreichend niedrig ist, so dass alle die nicht verbrennbaren Komponenten in dem Strom in Form von Feststoffpartikeln vorliegen.

8. Das Verfahren nach Anspruch 7, ferner umfassend: Hindurchleiten des teiloxidierten Verbrennungsproduktstroms durch ein oder mehrere Filter (370).

9. Das Verfahren nach Anspruch 7, wobei der Festbrennstoff Kohle, Lignit, Biomasse oder Petroleumkoks umfasst, wobei insbesondere der Festbrennstoff in partikulärer Form vorliegt und mit CO₂ aufgeschlämmt wird.

10. Das Verfahren nach Anspruch 5, wobei die Menge an kohlenstoffhaltigem Brennstoff und Sauerstoff, die der primären Brennkammer (10) bereitgestellt wird, gesteuert wird, derart, dass die Verbrennungswärme in der primären Brennkammer in umgekehrter Beziehung steht zu der von der Solarheizeinrichtung verfügbaren Wärme zum Erwärmen des unter Druck stehenden CO₂-haltigen Stroms, der durch die Solarheizeinrichtung (90) hindurchgeleitet wird, wobei insbesondere die von der Solarheizeinrichtung verfügbare Wärmemenge um mehr als 10 % über einen einzigen Solarzyklus hinweg variiert und wobei insbesondere die Menge an kohlenstoffhaltigem Brennstoff und Sauerstoff, die der Brennkammer bereitgestellt wird, gesteuert wird, derart, dass die Temperatur des CO₂-haltigen Stroms, welcher zu der Turbine (20) geleitet wird, um weniger als 10 % über den einen Solarzyklus variiert.

11. Das Verfahren nach Anspruch 1, ferner umfassend: Teilen des unter Druck stehenden CO₂-haltigen Stroms, welcher den Wärmetauscher (30) verlässt, bevor er mittels der Solarheizeinrichtung erwärmt wird, derart, dass ein erster Teil des unter Druck stehenden CO₂-haltigen Stroms zu dem Solarerwärmungsschritt weitergeleitet wird und ein zweiter Teil des unter Druck stehenden CO₂-haltigen Stroms zu der primären Brennkammer (10) geleitet wird, ohne zuerst durch die Solarheizeinrichtung (90) erwärmt zu werden.

12. Das Verfahren nach Anspruch 1, wobei die Solarheizeinrichtung den CO₂-haltigen Strom auf eine Temperatur von ungefähr 500 °C oder mehr erwärmt; oder
wobei die Solarheizeinrichtung durch den unter CO₂-haltigen Strom erwärmt wird; oder
wobei die Leistungserzeugung mit einem Gesamtwirkungsgrad von mindestens 60 % erzielt wird, basierend auf einem unteren Heizwert.

13. Ein Leistungserzeugungssystem, umfassend:
eine Lufttrennanlage (110);
eine Solarheizeinrichtung (90);
eine primäre Brennkammer (10) in Fluidverbindung mit der Solarheizeinrichtung;
eine leistungserzeugende Turbine (20) in Fluidverbindung mit der primären Brennkammer;
einen Wärmetauscher (30) in Fluidverbindung mit der leistungserzeugenden Turbine und der Solarheizeinrichtung; und
mindestens einen Verdichter (80) in Fluidverbindung mit dem Wärmetauscher.

14. Das Leistungserzeugungssystem nach Anspruch 13, umfassend eines oder mehrere der folgenden Elemente:
das Leistungserzeugungssystem umfasst ferner eine Verbrennungsheizeinrichtung (100), welche zwischen der Solarheizeinrichtung (90) und der primären Brennkammer (10) positioniert ist und mit diesen in Fluidverbindung steht;
das Leistungserzeugungssystem umfasst ferner eine Trenneinrichtung, welche zwischen dem Wärmetauscher (30) und dem mindestens einen Verdichter (80) positioniert ist und mit diesen in Fluidverbindung steht;
die Lufttrennanlage (110) ist eine kryogene Lufttrennanlage, umfassend einen adiabatischen Hauptverdichter und einen Booster-Verdichter; und der Wärmetauscher umfasst eine Serie von zwei oder mehr Wärmetauscheinheiten.

15. Das System nach Anspruch 13, ferner umfassend eine Teiloxidationsbrennkammer (360) mit einem Auslass in Fluidverbindung mit einem Einlass der primären Brennkammer (10), insbesondere umfassend eines oder beide der folgenden Elemente:
das System umfasst ferner ein Filter (370), welches zwischen dem Auslass der Teiloxidationsbrennkammer und dem Einlass der primären Brennkammer positioniert ist und mit diesen in Fluidverbindung steht; und
das System umfasst ferner einen Teiler (35), welcher stromabwärts eines heißseitigen Auslasses des Wärmetauschers (30) positioniert ist und mit diesem in Fluidverbindung steht, wobei der Teiler einen ersten Auslass in Fluidverbindung mit der Teiloxidationsbrennkammer und einen zweiten Auslass in Fluidverbindung mit der Solarheizeinrichtung (90) aufweist.

16. Das System nach Anspruch 13, ferner umfassend einen Teiler (135), welcher stromabwärts eines heißseitigen Auslasses des Wärmetauschers (30) positioniert ist und mit diesem in Fluidverbindung steht, wobei der Teiler einen ersten Auslass in Fluidverbindung mit der primären Brennkammer (10) und einen zweiten Auslass in Fluidverbindung mit der Solarheizeinrichtung (90) aufweist.

17. Das System nach Anspruch 13, ferner umfassend ein Strömungsventil (235), welches stromabwärts eines heißseitigen Auslasses des Wärmetauschers (30) positioniert ist und mit diesem in Fluidverbindung steht, wobei das Strömungsventil einen ersten Auslass in Fluidverbindung mit der primären Brennkammer (10) und einen zweiten Auslass in Fluidverbindung mit der Solarheizeinrichtung (90) aufweist, wobei das Strömungsventil dazu ausgebildet ist, die Strömung zwischen der Solarheizeinrichtung und der primären Brennkammer zu wechseln.

## Revendications

1. Procédé de génération de puissance, le procédé comprenant :
faire passer un courant contenant du CO₂ d'une chambre de combustion primaire (10) à travers une turbine (20) pour dilater le courant contenant du CO₂, générer de la puissance et former un courant d'échappement de turbine contenant du CO₂ ;
refroidir le courant d'échappement de turbine comprenant du CO₂ dans un échangeur de chaleur (30) pour obtenir un courant d'échappement de turbine refroidi ;
pressuriser le CO₂ issu du courant d'échappement de turbine refroidi pour obtenir un courant contenant du CO₂ pressurisé ;
chauffer le courant contenant du CO₂ pressurisé dans l'échangeur de chaleur (30) ;
chauffer en outre le courant contenant du CO₂ pressurisé à l'aide d'un dispositif de chauffage par énergie solaire (90) ; et
faire passer le courant contenant du CO₂ chauffé par énergie solaire et pressurisé dans la chambre de combustion primaire (10).

2. Procédé selon la revendication 1, comprenant une ou plusieurs des étapes suivantes :
le courant contenant du CO₂ qui entre dans la turbine (20) se trouve à une pression d'environ 150 bars (15 MPa), ou plus ;
le courant contenant du CO₂ qui entre dans la turbine se trouve à une température d'environ 500°C, ou plus ;
le rapport entre la pression du courant contenant du CO₂ qui entre dans la turbine et la pression du courant d'échappement de turbine comprenant du CO₂ est d'environ 12, ou moins ; et
l'étape de pressurisation du courant contenant du CO₂ comprend le passage du courant à travers une pluralité d'étapes de pressurisation, en particulier comprend en outre le refroidissement du courant contenant du CO₂ entre deux étapes de pressurisation.

3. Procédé selon la revendication 1, dans lequel une partie du courant contenant du CO₂ pressurisé est chauffée avec de la chaleur supplémentaire après l'étape de pressurisation et avant d'être chauffée par le dispositif de chauffage par énergie solaire (90), en particulier dans lequel la chaleur supplémentaire inclut de la chaleur de compression en provenance d'une installation de séparation d'air (110).

4. Procédé selon la revendication 1, comprenant en outre le passage du courant contenant du CO₂ chauffé par énergie solaire et pressurisé en provenance du dispositif de chauffage par énergie solaire (90) à travers un dispositif de chauffage par combustion (100) avant le passage dans la chambre de combustion primaire (10).

5. Procédé selon la revendication 1, comprenant en outre la combustion d'un combustible carboné dans la chambre de combustion primaire (10) en présence d'oxygène et du courant contenant du CO₂ de telle sorte que le courant contenant du CO₂ chauffé par énergie solaire et pressurisé qui passe à travers la turbine contienne en outre un ou plusieurs produit(s) de combustion.

6. Procédé selon la revendication 5, comprenant en outre la purification du courant d'échappement de turbine refroidi en provenance de l'échangeur de chaleur dans un séparateur (50) en séparant un ou plusieurs des produits de combustion du CO₂, ou dans lequel le combustible carboné est un liquide ou un gaz.

7. Procédé selon la revendication 5, dans lequel le combustible comprend un courant de produits de combustion partiellement oxydés, en particulier dans lequel le procédé comprend en outre la combustion d'un combustible solide en présence d'O₂ et de CO₂ dans une chambre de combustion à oxydation partielle (360), le combustible solide, l'O₂ et le CO₂ étant fournis dans des rapports tels que le combustible solide soit seulement oxydé partiellement pour produire le courant de produits de combustion partiellement oxydés contenant un composant incombustible, du CO₂ et un ou plusieurs composant(s) parmi le H₂, le CO, le CH₄, le H₂S et le NH₃ ; en particulier dans lequel le combustible solide, l'O₂ et le CO₂ sont fournis dans des rapports tels que la température du courant de produits de combustion partiellement oxydés soit suffisamment basse pour que la totalité du composant incombustible dans le courant se présente sous la forme de particules solides.

8. Procédé selon la revendication 7, comprenant en outre le passage du courant de produits de combustion partiellement oxydés à travers un ou plusieurs filtre(s) (370).

9. Procédé selon la revendication 7, dans lequel le combustible solide comprend le charbon, le lignite, la biomasse ou du coke de pétrole, en particulier dans lequel le combustible solide se présente sous une forme particulaire et est mélangé avec du CO₂.

10. Procédé selon la revendication 5, dans lequel la quantité de combustible carboné et d'oxygène fournie à la chambre de combustion primaire (10) est contrôlée de telle sorte que la chaleur de combustion dans la chambre de combustion primaire soit inversement proportionnelle à la chaleur disponible provenant du dispositif de chauffage par énergie solaire pour chauffer le courant contenant du CO₂ pressurisé qui passe à travers le dispositif de chauffage par énergie solaire (90), en particulier dans lequel la quantité de chaleur disponible provenant du dispositif de chauffage par énergie solaire varie de plus de 10 % sur un seul cycle solaire, et en particulier dans lequel la quantité de combustible carboné et d'oxygène fournie à la chambre de combustion est commandée de telle sorte que la température du courant contenant du CO₂ qui passe vers la turbine (20) varie de moins de 10 % sur un seul cycle solaire.

11. Procédé selon la revendication 1, comprenant en outre la division du courant contenant du CO₂ pressurisé sortant de l'échangeur de chaleur (30) avant le chauffage à l'aide du dispositif de chauffage par énergie solaire de telle sorte qu'une première partie du courant contenant du CO₂ pressurisé continue vers l'étape de chauffage par énergie solaire et qu'une seconde partie du courant contenant du CO₂ pressurisé passe vers la chambre de combustion primaire (10) sans être d'abord chauffée par le dispositif de chauffage par énergie solaire (90).

12. Procédé selon la revendication 1, dans lequel le dispositif de chauffage par énergie solaire chauffe le courant contenant du CO₂ à une température d'environ 500°C, ou plus ; ou
dans lequel le dispositif de chauffage par énergie solaire est chauffé par le courant contenant du CO₂ ; ou
dans lequel la génération de puissance est réalisée avec un rendement total sur un pouvoir calorifique inférieur d'au moins 60%.

13. Système de génération de puissance, comprenant :
une installation de séparation d'air (110) ;
un dispositif de chauffage par énergie solaire (90) ;
une chambre de combustion primaire (10) qui est en communication fluidique avec le dispositif de chauffage par énergie solaire ;
une turbine de production de puissance (20) qui est en communication fluidique avec la chambre de combustion primaire ;
un échangeur de chaleur (30) qui est en communication fluidique avec la turbine de production de puissance et le dispositif de chauffage par énergie solaire ; et
au moins un compresseur (80) qui est en communication fluidique avec l'échangeur de chaleur.

14. Système de génération de puissance selon la revendication 13, présentant une ou plusieurs des caractéristiques suivantes :
le système de génération de puissance comprend en outre un dispositif de chauffage par combustion (100) qui est positionné entre et est en communication fluidique avec le dispositif de chauffage par énergie solaire (90) et la chambre de combustion primaire (10) ;
le système de génération de puissance comprend en outre un séparateur qui est positionné entre et est en communication fluidique avec l'échangeur de chaleur (30) et ledit au moins un compresseur (80) ;
l'installation de séparation d'air (110) est une installation de séparation d'air cryogénique comprenant un compresseur principal adiabatique et un surpresseur ; et
l'échangeur de chaleur comprend une série de deux ou plus de deux unités d'échange de chaleur.

15. Système selon la revendication 13, comprenant en outre une chambre de combustion à oxydation partielle (360) comportant une sortie qui est en communication fluidique avec une entrée de la chambre de combustion primaire (10), présentant en particulier une ou plusieurs des caractéristiques suivantes :
le système comprend en outre un filtre (370) qui est positionné entre et est en communication fluidique avec la sortie de la chambre de combustion à oxydation partielle et l'entrée de la chambre de combustion primaire ; et
le système comprend en outre un diviseur (35) qui est positionné en aval de et est en communication fluidique avec une sortie d'extrémité chaude de l'échangeur de chaleur (30), ledit diviseur présentant une première sortie qui est en communication fluidique avec la chambre de combustion à oxydation partielle et une deuxième sortie qui est en communication fluidique avec le dispositif de chauffage par énergie solaire (90).

16. Système selon la revendication 13, comprenant en outre un diviseur (135) qui est positionné en aval de et est en communication fluidique avec une sortie d'extrémité chaude de l'échangeur de chaleur (30), ledit diviseur présentant une première sortie qui est en communication fluidique avec la chambre de combustion primaire (10) et une deuxième sortie qui est en communication fluidique avec le dispositif de chauffage par énergie solaire (90).

17. Système selon la revendication 13, comprenant en outre une soupape d'écoulement (235) qui est positionnée en aval de et est en communication fluidique avec une sortie d'extrémité chaude de l'échangeur de chaleur (30), ladite soupape d'écoulement présentant une première sortie qui est en communication fluidique avec la chambre de combustion primaire (10) et une deuxième sortie qui est en communication fluidique avec le dispositif de chauffage par énergie solaire (90), ladite soupape d'écoulement étant adaptée pour exécuter un écoulement alternatif entre le dispositif de chauffage par énergie solaire et la chambre de combustion primaire.
